# EUROPEAN PATENT APPLICATION

(11) **EP 2 385 362 A1**
(43) Date of publication of application: **09.11.2011**
(21) Application number: 10192451.2
(22) Date of filing: 24.11.2010
(51) Int. Cl.: G01N 21/65

(54) **Method and apparatus for thin film quality control**

(30) Priority: 06.05.2010 US 775293
(71) Applicant: Brightview Systems Ltd., 49002 Petach-Tikva (IL)
(72) Inventor: Finarov, Moshe, 76470, Rehovot (IL)
(74) Representative: Jennings, Tara Romaine

(57) **Abstract**

Photovoltaic thin film quality control is obtained where the thin film is supported by a support and a section of the film is illuminated by a polychromatic or monochromatic illumination source. The source forms on the thin film an illuminated line. The light collected from discrete sampled points located on the illuminated line is transferred to a photo-sensitive sensor through an optical switch. The spectral signal of the light reflected, transmitted or scattered by the sampled points is collected by the sensor, processed and photovoltaic thin film parameters applicable to the quality control are derived e.g. thin film thickness, index of refraction, extinction coefficient, absorption coefficient, energy gap, conductivity, crystallinity, surface roughness, crystal phase, material composition and photoluminescence spectrum and intensity. Manufacturing equipment parameters influencing the material properties may be changed to provide a uniform thin film layer with pre-defined properties.

## Description

### TECHNOLOGY FIELD

The method and system relate to the area of thin film quality control and in particular, to the quality and process control in manufacturing thin film photovoltaic cells.

### BACKGROUND

Scarcity and environmental effects of fossil energy sources that emerged in recent years have accelerated development of alternative energy sources. Thin film photovoltaic solar panels, being one such source, have attracted particular attention. These panels represent a number of different thin films (stack) deposited on large size flexible web substrates or large size rigid substrates like glass, metal and others. The films may be of such materials as dielectrics, metals, semiconductors, and are typically combined in multilayer stacks usually separated by so-called scribe lines into a plurality of individual photovoltaic cells. In addition to separating the cells, the scribe lines enable serial connection of individual photovoltaic cells increasing the voltage generated by the panel.

The panels are produced in a continuous production process, where they are transferred from one station to another by conveyor type facilities. The continuous production process does not allow the process to be stopped, and panel quality control off-line to be performed as in other thin film industries. Accordingly, the layer quality control should either be a part of the production process or what is known as on-line quality control. The speed of the on-line quality control should be such as to allow the production process to be maintained without reducing the conveyor speed and, at the same time allow, material characterization, defect detection, defect classification and generation of feedback to the forward or backward located production stations with respect to the quality control system production systems and, if possible, defect repair.

There are several important material parameters of the thin films which need to be known to successfully control the process. These parameters include: the refractive index (n) and the extinction coefficient (k), both as a function of the wavelength, the film thickness (d), roughness, energy gap, absorption, roughness, conductivity, crystallinity percentage, crystal phase or material composition, photoluminescence spectrum and intensity as well as some other parameters. To provide information useful for quality assessment, these parameters should be measured continuously and almost simultaneously across the width of the moving panel/web such that the measurement data collected will provide a sufficient data density required for mapping real time monitoring of a respective process quality. The measurement process and measurement conditions should be the same for each of sampled points and the signal-to-noise ratio of the measurement should enable determination of reliable thin film optical parameters.

Availability of such a method of thin film quality control would significantly improve the quality of thin film solar panel production, improve the yield, and reduce the costs. The photovoltaic solar thin film production industry would welcome such a method and would use it for different thin film production applications.

### BRIEF SUMMARY

A method and apparatus for a photovoltaic thin film quality control where the thin film is supported by a support and a section of the film is illuminated by a polychromatic illumination source or a monochromatic illumination source such as laser. The source may form on the thin film a substantially continuous illuminated line or illuminate discrete sampling points. A sampling unit samples a plurality of discrete sampled points located on the illuminated line and images the points onto an optical switch. A control unit with the help of a calibration scanner generates a concordance look-up-table between the coordinates of the above sampled points on the thin film and their coordinates on the optical switch. A single detector samples all of the points by optically switching between the points and determines the spectral signal of the illumination reflected, transmitted or scattered by the sampled points. The photovoltaic thin film parameters applicable to the quality control are derived from the spectral signal and include film thickness, index of refraction, extinction or absorption coefficients, surface roughness, crystallinity percentage, conductivity, energy gap, crystal phase, material composition and others. The derived film parameters are applied to adjust manufacturing equipment process control parameters.

### BRIEF DESCRIPTION OF THE DRAWINGS

The method and system disclosed are herein presented, by way of non-limiting examples only, with reference to the accompanying drawings, wherein like numerals depict the same elements throughout the text of the specifications. The drawings are not necessarily to scale, emphasis instead being placed upon illustrating the principles of the method.

FIGS. 1A-1C are schematic illustrations of some exemplary embodiments of the present system for thin film parameters quality control.

FIGS. 2A and 2B are schematic illustrations of exemplary embodiments of the illumination units of the present system for thin film parameters quality control.

FIGS. 3A and 3B are exemplary embodiments of the illumination units butting configuration.

FIGS. 4A-4E are schematic illustrations of some exemplary embodiments of the optical sampling unit of the present system for thin film parameters quality control.

FIGS. 5A-5D are schematic illustrations of some exemplary embodiments of the coordinate calibration facility of the sampling unit.

FIG. 6 is a schematic illustration of an exemplary embodiment of the spectral calibration facility of the sampling unit.

FIG. 7 is a schematic illustration of the process of matching the actually measured spectrum data of illumination reflected (or transmitted) from a thin film to a theoretical thin film spectrum.

FIGS. 8A and 8B are schematic illustrations of an exemplary embodiment of a thin film quality control process employing the present system.

FIG. 9 is a schematic illustration of another exemplary embodiment of a thin film quality control process employing the present system.

FIG. 10 is a flow diagram illustrating the steps involved in an exemplary system.

### GLOSSARY

The term "thin film" as used in the current disclosure means a single photovoltaic thin film and a plurality of thin films with each film deposited on the top of the previous one or what is known as a "stack."

Any one of the terms, "reflection" or "transmission" as used in the present disclosure incorporate both reflection and transmission phenomena.

Any one of the terms, "light", "illumination" or "radiation" as used in the present disclosure has the same meaning.

The term "sampled point" as used in the current disclosure means any point of the thin film at which reflection or transmission spectra or scattering is measured.

The term "collected" means light reflected, transmitted or scattered by a sampled point and received by a sensor.

The term "individual photovoltaic cell" as used in the current disclosure means any thin film photovoltaic cell bound by scribe lines scribed in different thin films of the stack.

The term "panel" as used in the current disclosure means a plurality of photovoltaic cells located on the same substrate and electrically connected between them.

The term "Raman scattering" relates to inelastic scattering where the scattered light has a different than the incident light wavelength.

### DETAILED DESCRIPTION OF EXEMPLARY EMBODIMENTS

In the following detailed description, for purposes of explanation only, numerous specific details are set forth in order to provide a thorough understanding of the present system and method. It will be apparent, however, that the present system and method may be practiced without these specific details. In other instances, well-known structures and devices are schematically shown in order to simplify the drawings.

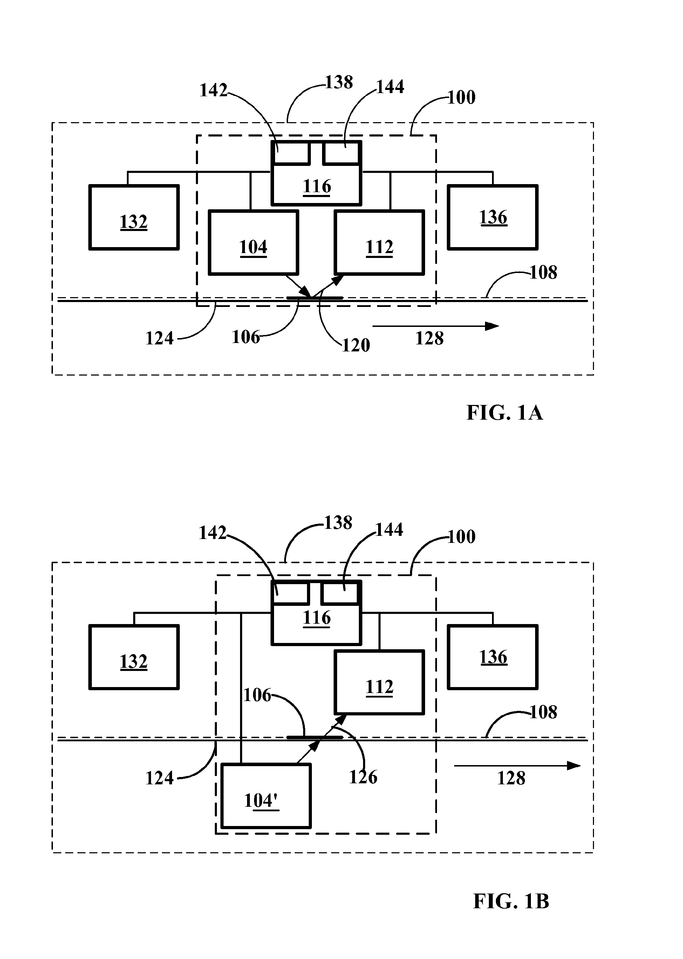

Reference is made to FIG. 1A, which is a schematic illustration of an exemplary embodiment of the present system for thin film parameters quality control. System 100 includes one or more illumination units 104 configured and operative to illuminate an object plane 106, which coincides with a section of the controlled thin film 108; an optical sampling unit 112 configured and operative to sample multiple discrete points located in the object plane 106 and coinciding with illuminated section of film 108, and a control unit 116 configured and operative to control the operation of illumination 104 and sampling 112 units, and process the sampled data, which determines thin film 108 thickness and optionally other parameters. FIG. 1A illustrates system 100 including illumination unit 104 and sampling unit 112, which are configured to operate with light beam 120 reflected from the thin film 108 illustrated as being located in object plane 106. FIG. 1B illustrates system 100 including illumination unit 104', and sampling unit 112 of which are configured to operate with light beam 126 which is transmitted through the thin film 108. Illumination units 104 and 104' may provide polychromatic illumination or monochromatic illumination, such as laser illumination.

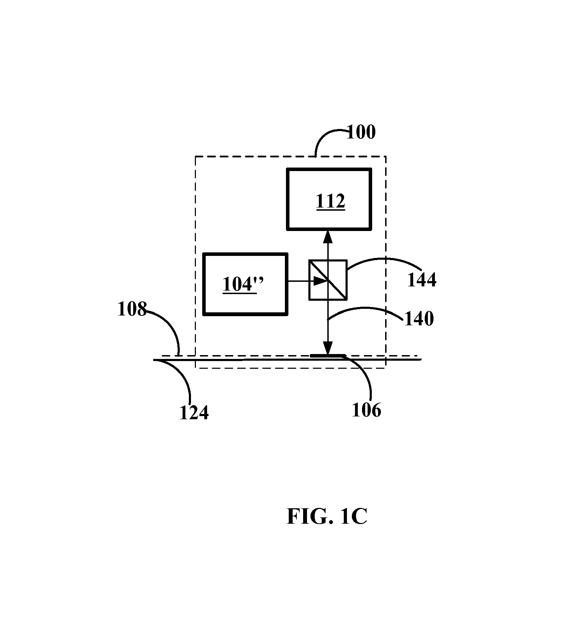

FIG. 1C illustrates system 100 including illumination unit 104" that may be configured to provide polychromatic illumination or monochromatic illumination, such as laser illumination or light, and sampling 112 unit, which is configured to operate with light beam 140, normally incident on and reflected from object plane 106. Object plane 106 coincides with thin film 108. A beam splitter 144 of any known construction supports operation of such a system. In an alternative embodiment, system 100 including illumination 104 (104', 104") and sampling 112 units may be located on both sides (below and above) the thin film layer to be controlled, as disclosed in Provisional Patent Applications Serial No. 61/160,294 which is incorporated above by reference. The illumination units may illuminate the controlled thin film simultaneously from both sides and the sampling units may read the sampled points simultaneously from both sides of the thin film.

Operation of any one of the systems illustrated in FIG. 1A through FIG. 1C provides required measurement results.

Typically, one or more thin films 108 could be deposited on a rigid or flexible substrate 124 that may be sheet cut or a continuous web substrate. Thin film deposition is a continuous production process and in order to coat and pattern different substrate sections by one or more thin films 108, the substrate is translated between different production stations located backward 132 (See FIG. 1A and 1B), with respect to system 100, or forward 136 along a pre-determined direction as shown by arrow 128. The stations may be different layers deposition stations, scribing stations, contact shunt burning stations, and others. System 100 could be configured as an in-line quality control system and utilize the existing system production line substrate translation facilities or as an off-line system having its own substrate translation facility (not shown). The existing substrate translation facilities may be a conveyor, a rigid panel support or other translation facilities suitable for translating the substrate with the deposited or coated film on it in a controllable manner. One or more stations may be equipped with a sensor for detecting the panel edge or another geometrical attribute (e.g. coordinates of a scribe line, photovoltaic cells pattern, etc.), for synchronizing panel movement and operation of optical sampling units (not shown).

Control unit 116 (FIGS 1A and 1B) includes a memory 142 that stores different data used through the thin film quality control process, a communication module 144 controlling a number of communication links enabling communication between different units and stations of system 100, for example substrate translation facilities, film deposition stations, and/or control facility, and communications with the forward and backward located thin film production systems. The communication links may be standard wire or wireless communication networks communicating by standard protocols or via a recordable media. These communication links enable effective thin film production process control.

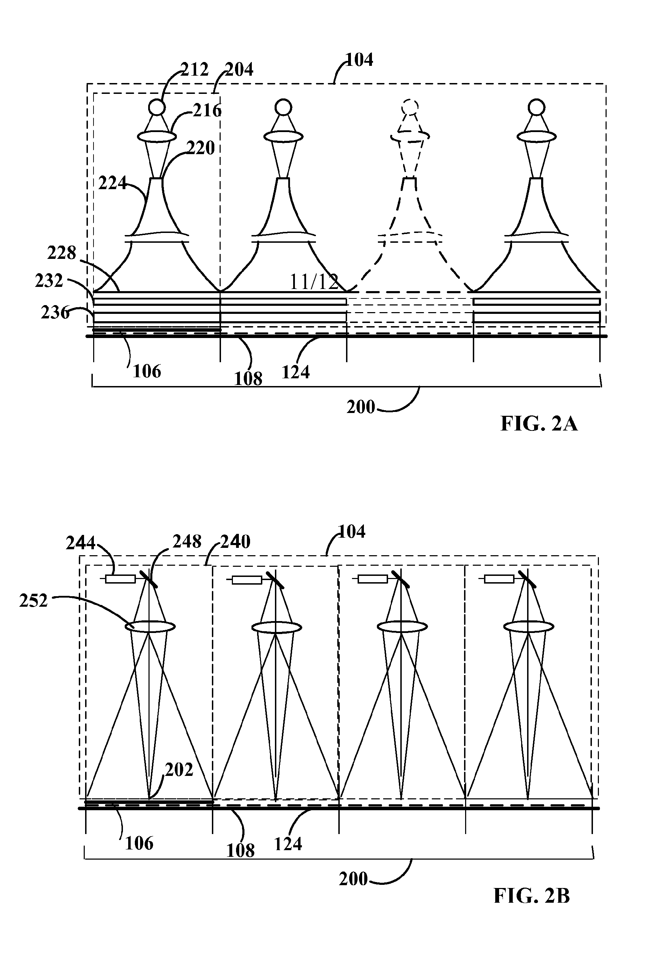

FIG. 2A is a schematic illustration of an exemplary embodiment of the illumination unit of the present system for quality control of the thin film parameters. Substrates, on which are deposited one or more different thin films (stack), could be from a few centimeters wide to a few meters wide. Illumination unit 104 illuminates a segment 200 of thin film 108, or another object to be controlled, either located or coinciding with object plane 106 of system 100. The illuminated segment has a length equal or greater than the full film 108 width.

Each of the illuminations sub-units 204 include a light source 212 such as an incandescent lamp or arc lamp, luminescence lamp, white LED or an assembly of LEDs forming a polychromatic light source. The spectrum of polychromatic illumination sources 212 is selected such as to ensure that at least a part of the thin film controlled is partially transparent. A condenser lens 216 collects the illumination emitted by source 212 and images source 212 on the first end or input facet 220 of a fiber optics bundle 224. Lens 216 also matches the illuminating beam aperture to the aperture of fiber optics bundle 224. First end 220 of fiber optics bundle 224 is planar and configured into a round or rectangular shape with dimensions of 15 mm to 25 mm. The second end or output facet 228 of fiber optics bundle 224 is configured into a line. Assuming a bundle of 200,000 fifty-micron diameter fibers, the line would be about 1000 mm long. In some embodiments fibers may be located such that there will be a distance between them illuminating discrete locations and forming a line e.g. longer than 1000 mm. In order to provide a more homogeneous illumination distribution along the illuminated line, a diffuser 232 is inserted between second end 228 of bundle 224 and cylindrical lens 236 imaging the second end 228 in the object plane 106 coinciding with thin film 108 plane.

FIG. 2B is a schematic illustration of another exemplary embodiment of the illumination unit of the present system for quality control of the thin film parameters. Illumination unit 238 [GSS- not included in Fig. 2B] that includes a number of sub-units 240, illuminating discrete points 202 along a segment 200 of thin film 108, or another object to be controlled, either located or coinciding with object plane 106 of sub-unit 240. The illuminated segment 200 has a length equal or greater than the full film 108 width.

Illumination unit 238 is a laser based illumination unit. A laser light source is selected to ensure efficient inelastic Raman scattering useful for measuring structural properties of film 108. Each of the illuminations sub-units 240 includes a light source 244 such as a green 514nm Argon laser or a red HeNe laser emitting at 632.8nm, or semiconductor green lasers emitting in the range of 500nm to 515nm commercially available from Nichia Co. Ltd., Tokushima Japan, or Sumitomo Co. Ltd., Tokyo Japan and Osram GmbH, Munich Germany and semiconductor red lasers emitting in the range of 615nm to 652nm available from Sony Tokyo Japan and Sanyo Tokyo Japan and a number of other manufacturers as well as an optional scanning mirror 248 and a lens 252. Lens 252 forms on the controlled thin film a spot 202 of several tens to several hundreds of microns. The spot size, illumination time, and the power density that the spot couples to the thin film are selected to enable efficient Raman scattering without causing crystallization or other negative effects within the measured thin film. The lasers may be operated in a continuous operation mode or pulse mode with pulse duration of several milliseconds to a few seconds. Operation in pulse mode may be synchronized with measurement locations during panel movement on a conveyer. It should be noted that light delivery to the sampling points, e.g. from a laser, can be also provided via an optical switch.

In some embodiments the illumination unit may include both polychromatic light sources and monochromatic light sources such as lasers. Different optical elements such as beam combiners and similar (not shown) may be used to enable illumination of the same controlled thin film sampled spot by each of the illumination types.

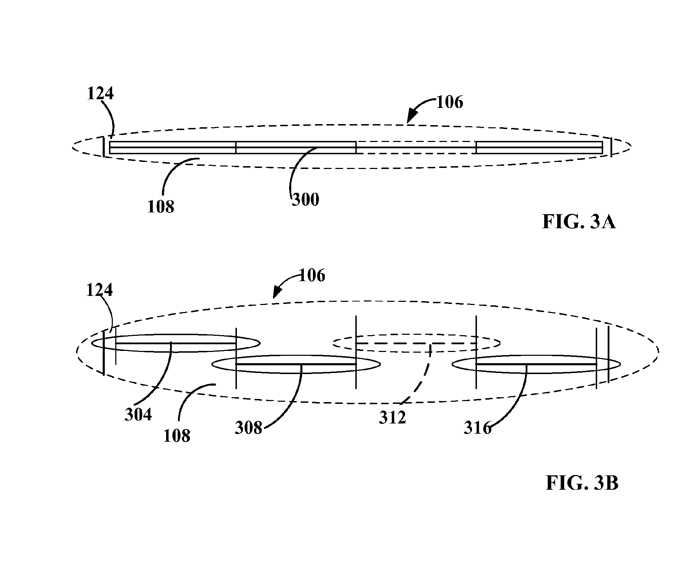

A number of illumination sub-units 204 with each sub-unit illuminating a segment 300 (FIG. 3A) of object plane 106 containing thin film 108 are arranged such that the full illuminated forms a substantially continuous line. The dimensions of the line being equal or greater than substrate 124 width. FIGS. 3A and 3B are exemplary embodiments of the object plane 106 illuminated by illumination sources 204 operative to illuminate a line spanning across the full substrate width. Depending on this width, it may include a number of illumination units or sources 204 seamlessly butted, as shown in FIG. 3A, to illuminate substantially a line 300 on film 108. Alternatively, illumination sources 204 or 240 may be staggered and illuminate different sections 304, 308, 312, and 316 of object plane 106 and film 108 (FIG. 3B). Lasers may be set to provide an illumination at discrete locations over the desired sampling points in a linear or staggered array. Multiple discrete locations may be illuminated either by multiple lasers or by one laser e.g. by means of fiber bundle. Synchronization of the sampled points located in these sections may be done electronically.

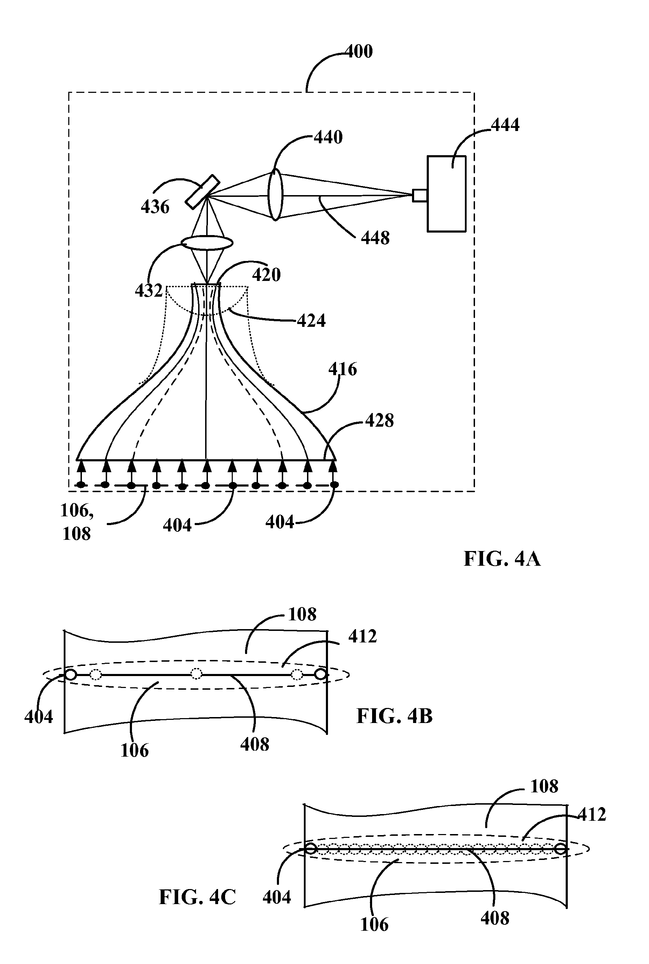

FIG. 4A is a schematic illustration of an exemplary embodiment of the optical sampling unit of the present system for the thin film parameters quality control. Sampling unit 400 samples a plurality of discrete sampled points 404 residing on the same line 408 (FIG. 4B) in the illuminated object plane 106 coinciding with segment 412 of the controlled thin film 108. Unit 400 includes an optical shape converter 416 configured to convert illuminated line 408 into a two-dimensional plane 420 or into a curved space or line 424. A fiber optics bundle with about 20,000 fibers is picking-up or receiving sampled points spaced about 1 mm or less from each other would be sufficient for such a converter. The input facet or first end 428 of bundle 416 is arranged into a one-dimensional shape, e.g. straight line. The output facet or second end 420 of bundle 416, depending on the type of optical switch, may be a plane, typically of a rectangular or circular shape, or a curved line 424 for example, such as a segment of a circle. Bundle 416 conveys the illumination or radiation reflected from or transmitted through thin film 108 onto output facet 420 or 424 of bundle 416. Output facet 420 of bundle 416 may have a diameter of about 5-25 mm. A lens 432 images or transfer output facet 420 onto a two-dimensional optical switch 436. Switch 436 may be a deflectable micro mirror matrix, e.g. Digital Mirror Device (DMD) with about 1024 times 768 (micro mirrors) pixels and size of about 11 by 14 mm² commercially available from Texas Instruments, Inc., Dallas, Tex. 75243, USA, or of any other type of switch enabling very short switching time (less than 1 millisecond). Switch 436 reflects and directs in a sequential manner through lens 440 radiation received from each of the sampled points 404 to a spectrometer 444, such as MCS 1 spectrometer, commercially available from Carl Zeiss, Jena, Germany. Spectrometer 444 has a built-in photo detector able to measure simultaneously light intensity at multiple wavelengths. When the switch mirror does not direct the selected light beam to spectrometer 444, the reflected radiation is directed outside the aperture of lens 440 and thus is not measured by the spectrometer.

In an alternative embodiment, illustrated in FIG. 4C, sampled points 404 of the input facet of first end 428 of bundle 416 located on line 408 are arranged such that they enable radiation to be addressed and collected from any one of the points located on line 408. One or more DMDs synchronized between them may sample the output of the end 420 of bundle 416. Ability to address any sampled point in object plane 106 enables sampling and light collection of different object plane segments with different resolution. Some segments of object plane 106 may be sampled more densely than other sections. This enables flexibility in applying different application specific resolutions to scanning different thin films and their combinations.

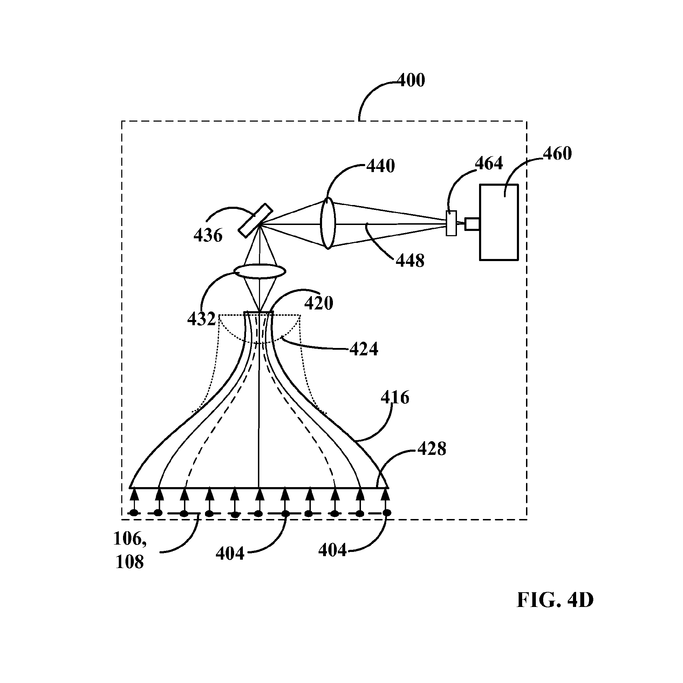

FIG. 4D is a schematic illustration of an exemplary embodiment of the sampling unit of the present system for thin film parameters quality control for measuring Raman scattering from the controlled thin film. Spectrometer 444 is replaced by a spectrometer 460 operative to measure Raman spectrum of scattered light (collected or received from measured thin film 108), which may be such a spectrometer as Dimension-P1™ Raman spectrometer commercially available from Lambda Solutions, Inc., Waltham, MA 02452, U.S.A., or model Holospec f/1.8 commercially available from Kaiser Optical Systems, Inc., Ann Arbor MI 48103 U.S.A. In case of measuring Raman spectrum signal, illumination system 240 may include also a narrow-band (notch) filter for ensuring highly monochromatic illumination. A "notch" (a narrow band) or long-pass step filter 464 mounted at the entrance to the spectrometer rejects the illuminating light from the exciting laser and transmits the light scattered by the thin film 108 only.

In some embodiments of the sampling unit both Raman spectrometer 460 and spectrometer 444 may be present and optical switch 436 or an additional mirror may be operative to direct the spectrum to be analyzed to the proper spectrometer. Operation of switch 436 or of the additional mirror may be synchronized with the operation of the illumination sources and spectrometers. In order to determine additional thin film parameters, Raman scattering measurements can be combined with either reflectance or transmittance measurements or both by sampling on points located in a close proximity to the Raman sampling point.

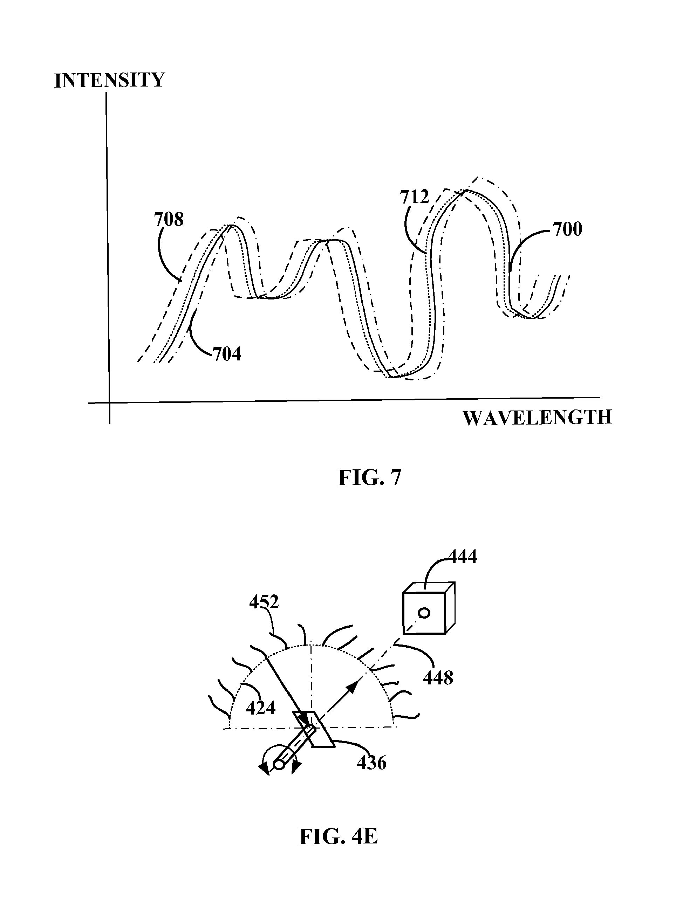

When output facet or second end of bundle 416 (FIG. 4A and 4D) is configured in a curved line 424 such as a segment of a circle and the optical switch is a rotating mirror, mirror 436 acts as a scanning mirror rotating around an axis 448 (FIG. 4E) related in space to the optical axis of spectrometer 444. Individual fibers 452 forming curved line 424, which is a segment of a circle, are located in a plane perpendicular to axis 448. In this embodiment, curved line 424 is centered on axis 448 however, other spatial placement of the mirror axis and spectrometer optical axis are possible. The size of the rotating mirror 436, appropriate optical focusing elements (not shown) and the distance between the neighbor fibers forming curved line 424 may be selected such as to reduce interference with illumination transmitted by other fibers and to fully utilize the extent of the light beam emitted from the fibers. The numerical aperture of fibers forming curved line 424 may be selected to match the numerical aperture of spectrometer 444.

Thin film optical parameters such as the film thickness (d), film refractive index (n), film extinction coefficient (k), surface roughness, intensity and spectrum of photoluminescence or Raman scattering, and the like may change between the sampled points 404. These parameters characterize the quality of the thin film as well as that of the process of its manufacture and influence the reflected/transmitted light spectrum. Spectrometer 444 is operative to determine the spectral signal of the light collected from each of sampled points 404, enabling, as explained below, determination of these parameters. Specific material parameters can be extracted from the measurements of the thin film characteristics, for example by help of using dielectric function models for fitting the wavelength dispersion of the refractive index (n) and the extinction coefficient (k). The parameters can include film thickness, energy gap, absorption coefficient, surface roughness, conductivity, crystallinity percentage, crystal phase or material composition. It should be noted that the crystallinity may be determined using either absorption coefficient or by analyzing Raman scattering spectrum. ["Relationship between Raman crystallinity and open-circuit voltage in microcrystalline silicon solar cells", C. Droz, E. Vallat-Sauvain, J. Bailat, L. Feitknecht, J. Meier, A. Shah, Solar Energy Materials and Solar Cells 81, issue 1, 61-71, 2004]. Sampling unit 400 selects and samples a plurality of points 404 located on a straight line 408 residing in the illuminated object plane 106 of thin film 108. Particular thin film production process or thin film materials may determine the number, size and location of sampled points 404, for example, the sampled points may be located within individual photovoltaic cells, scribe lines, contact frames, and specially introduced measurement targets. In order to interpret the measured spectrum into thin film parameters at the particular sampled point 404 it is desirable to have coordinates of each of the sampled points on the thin film. This may be achieved, for a coordinate axis along the panel width, by a process of calibration in course of which a concordance or look-up-table (LUT) between the location of each of the sampled point 404 on illuminated line 408 of the controlled thin film 108 and its image spot on two-dimensional switch 436 or on a curved line 424 is determined as well as for coordinate axis along the panel length by controlling the movement of the measured panel on a conveyer.

It should be noted that knowledge of the above measured material parameters and their spatial distribution within the thin film enables improvement of deposition process or treatment of the thin film and in particularly thin film uniformity. This may be done for example, by varying process equipment control parameters such as deposition time, deposition temperature, deposition rate, pressure in the deposition chamber, deposition source material composition, etc.

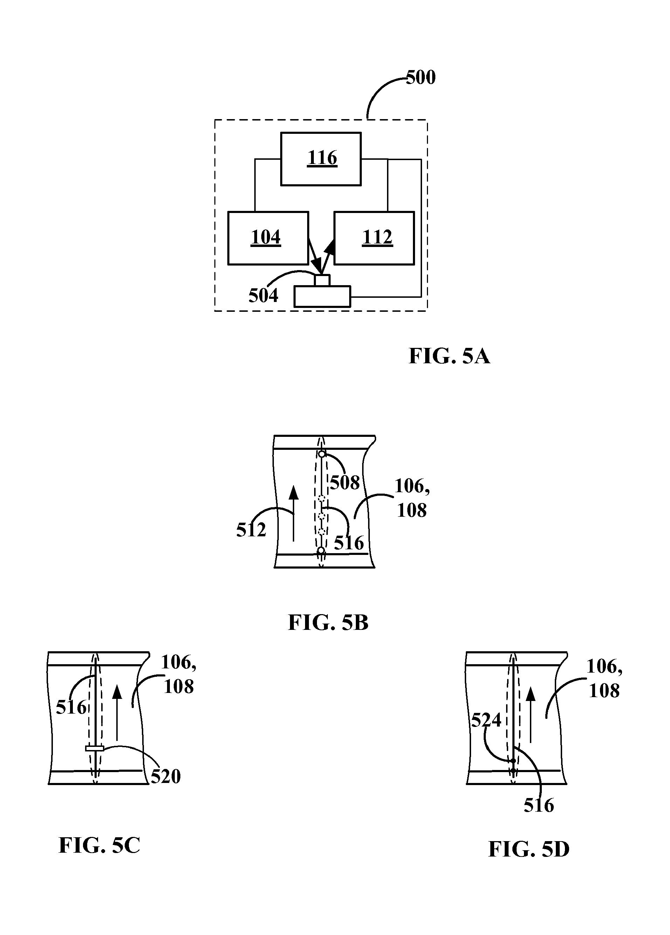

The coordinate calibration facility 500, a schematic illustration of an exemplary embodiment of which is shown in FIG. 5A, utilizes for example, the illumination unit 104, sampling unit 112, and control computer 116. Facility 500 may include a small size mirror 504 (similar in dimensions to the size of an individual optical fiber) that moves, as shown by arrow 512 (FIG. 5B), along the illuminated line/section 516 such that at any location it reflects light from only one sampled point 508. Generally, for coordinate determination it would be sufficient to receive the light by at least one pixel (micro mirror) of switch 436 or, in case when the switch is a scanning mirror, the light picked-up by a single fiber of bundle 416.

In a case when one fiber illuminates several mirrors on the optical switch, all these mirrors should be identified and attributed to the selected sampled point. The detector of spectrometer 444 or 460 measures the radiation or light intensity reflected by each of these mirrors and determines the one with the maximal intensity. Coordinates of each of the pixels of switch 436 are well known, and coordinates of the mirror 504 moving along illuminated line could be easily identified by connecting a linear or rotary encoder to the mirror. Based on these coordinates a concordance or LUT containing corresponding coordinates of the sampled points on the controlled thin film corresponding to their coordinates on the converter facets can be prepared. It should be noted that in case of transmission configuration as shown in FIGS. 5C and 5D instead of small mirror 504 a small slit 520 or diaphragm 524 may be used.

The diameter of individual fibers forming bundle 416 is about 50 micron. The size of an individual micro mirror (pixel) of switch 436 is about 14X14 micron or less. Under the assumption that lens 432 images bundle 416 (FIG. 4) output facet with magnification 1:1, ten to fourteen micro mirrors (pixels) would receive reflected or transmitted illumination conducted by a single fiber. The accuracy of coordinate determination may be increased by proper processing of the illuminated spot formed by a single fiber image. For example, finding the point coordinates by determining the pixel corresponding to the location of the illuminated spot gravity center.

Correspondence between the input facet 428 of bundle 416 and individual fibers forming curved line 424 is easy to establish since only one fiber at a time picks-up the illumination reflected by mirror 504 or transmitted by slit 520 or aperture 524.The imaging system 440 that images the spot on the two-dimensional array may be a variable magnification system providing an illuminated spot of the desired size, further increasing the accuracy of spot coordinates on the switch determination. Practically, the scanning mirror, or slit, or diaphragm, are illumination modulation devices (or objects) that modulate the illumination along the sampled line. Determination of the coordinates of these devices along the illuminated line and corresponding to these location coordinates on the switch enable generation of a look-up-table (LUT). Generally, the LUT may be prepared at the optical sampling unit production stage, since once unit 112 is assembled, the relation between the sampled points 404 coordinates on the illuminated line 516 and the corresponding output plane 420 of fiber optics bundle remains constant. The calibration method described allows low cost non-coherent optical fiber bundles to be used. Typically, the LUTs would be stored in memory 142 (FIG. 1).

The system disclosed enables quality control of a thin film with the sampled points arranged substantially in a line or staggered line segments across one dimension of the substrate. A mechanism providing a relative movement between the thin film located in the object plane and the object plane 106 approximately perpendicularly to the direction of the illuminated line 516 (300, 408) on which sampled points 508 are located enables scanning and sampling of the other dimension of the thin film.

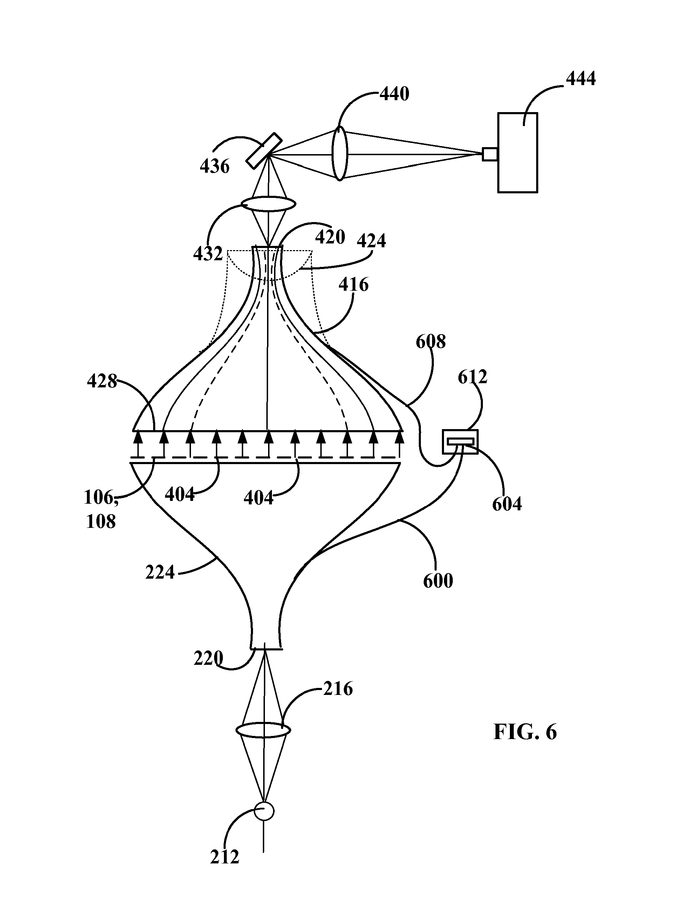

It is known that thermal drift of the light sources adversely affects the spectral stability of the illumination emitted by these sources and makes it insufficient for accurate determination of thin film optical parameters. The instability of the light sources may be compensated by a comparison of the spectrum to a well known and stable source of spectrum and normalization of the measurement results. FIG. 6 is a schematic illustration of an exemplary embodiment of the spectral calibration facility of the sampling unit. One or more individual fibers 600 may be selected from fiber bundle 224 (FIG. 2) and their illumination could be used to illuminate an optically stable material 604, for example, a silicon substrate, which has stable and known optical properties. In a similar way, one or more fibers 608 may be separated from the receiving bundle 416 and configured to collect or receive reflected, transmitted or scattered illumination from calibration target 604. Location of fibers 608 on optical switch 436 could be determined in the process of coordinate calibration and the read-out of this spot would be used for calibration measurements only. The spectrometer signal received from each of the sampled points may now be calibrated with respect to the received spectrum of the silicon substrate 604 which will serve as a calibration target for measurement calibration.

Optical properties of silicon are stable so the changes that may occur in the quality control process are changes most probably relating to the changes in the spectrum of illumination source 204. In order to reduce the possible measurement errors that may be caused by the built into spectrometer 444 detector, the detector stability may be further improved by stabilizing detector temperature and excluding any environmental changes effect. This is usually done by coupling a detector with a thermoelectric cooler and packing the detector into a hermetically closed housing. Practically, the present system allows calibration of measurements of every reading of the detector and introducing/using the calibration results for actual spectrum measurement correction.

The simplest way to correct the results of spectrum measurement is to correct all sampled point measurement results on an equal value. Generally, calibration based on silicon calibration target or other optically stable target allows both a relative and absolute calibration of the spectrum measurement. For example, the silicon calibration target optical properties are well known and methods of calculating its absolute reflection coefficient are also known. For example, see U.S. RE 34,873 patent. Each system may be produced with a calibration target and even the differences or change between the systems will be minimized. Other than silicon materials, such as glass, multilayer coatings similar to the controlled coating, and materials similar to the coating controlled, may be used for the calibration purpose.

Control unit 116 (FIG. 1) governs operation of system 100 units and synchronizes their operation. Control unit 116 performs processing of the spectral data acquired from sampled points 404. Processing of the determined spectral signal data and its transformation into thin film parameters is a computational process requiring significant computational resources and time. The present system replaces the time consuming computational process by a very fast process of comparison of the actual measured spectral signal to a similar spectral signal stored in a library of theoretical spectra calculated for different sets of thicknesses and optical constants of the measured thin films covering the entire variety of these parameters at the setup stage. The control unit processing consists of selecting a theoretical spectra data as close as possible to match the measured thin film spectrum data. Selection of a theoretical spectra data matching the measured thin film spectrum data is an exceptionally fast process enabling conducting thin film quality control at the speed of the photovoltaic panel on the production line advance

FIG. 7 is a schematic illustration of matching the actually measured spectra data of radiation reflected (or transmitted or scattered) from a thin film to a theoretical thin film spectrum. Numeral 700 refers to the actually measured spectrum reflected by the thin film 108 and numerals 704, 708 and 712 relate to the theoretical spectra calculated for different sets of thicknesses of the same thin film. Based on some merit function criteria of measuring the spectral differences of spectrum 712 could be selected as the one most closely matching spectrum 700. Theoretical spectrum 712 was calculated for a predetermined set of expected thin film parameters. As such, the thin film parameters included in the calculation of the theoretical spectrum are at least some of the group of film thickness (d), film refractive index (n), film extinction coefficient (k), film roughness, energy gap, conductivity, crystallinity and others which are the closest to the parameters of the measured spectrum. These parameters become the parameters characterizing the measured thin film.

FIG. 7 indicates that the spectrum has peaks and valleys. Generally, the film thickness determination could be supported by measurements at the peaks only. However, since other optical parameters such as refractive index (n) and extinction coefficient (k) should be determined, it is necessary to perform the measurements through the whole spectrum or at least at such sections of the spectrum where the sensitivity to selected variables is the highest one. Such sensitivity analyses may be carried out at the setup stage.

Control unit 116 (FIG. 1) includes a memory 142 containing, in addition to the look-up-tables, determining coordinates of the sampled points, a library of theoretical spectra calculated for different sets of thicknesses and optical parameters of measured films covering the entire variety of these parameters as well as a module receiving a panel coordinates from the panel translation facility during panel movement and synchronizes sampling time such that the sampling spot will be positioned in a pre-determined location, e.g. within an individual photovoltaic cell or alternatively within the scribe line, contact frame or specially introduced measurement targets.

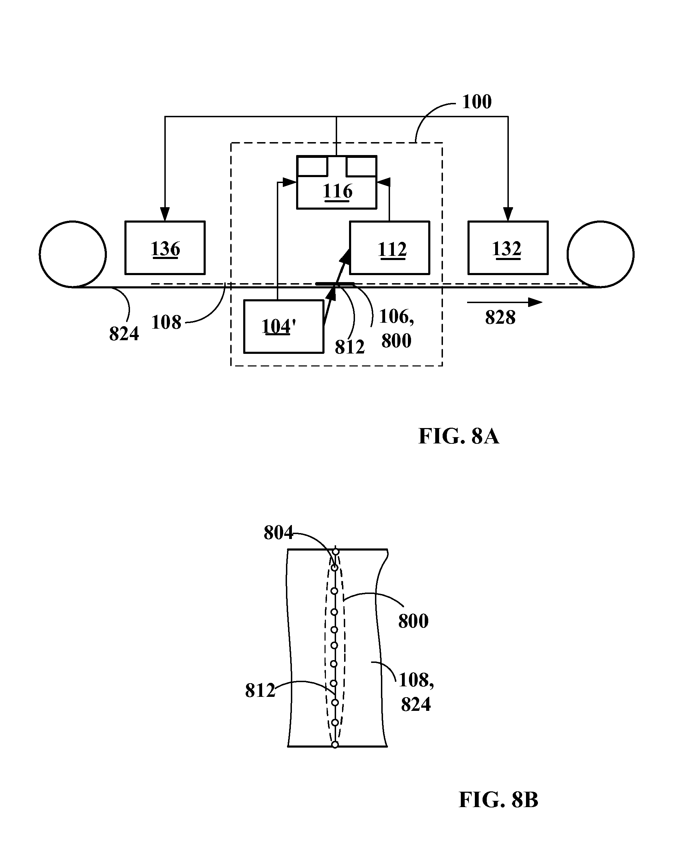

The system described is used for quality control of a thin film deposited on any substrate and, in particular, on a large area substrate. FIG. 8A is a schematic illustration of an exemplary embodiment of thin film quality control process. Illumination unit 104', 104", or 238 of system 100 illuminates object plane 106 coinciding with section 800 of the surface of thin film. A suitable sampling unit samples the illumination transmitted or scattered by each of a number of discrete points 804 located on a straight-line 812 perpendicular to the plane of the drawing in illuminated section 800 of thin film 108. Discrete points 804 typically would be selected to be located about the center of an individual photovoltaic cell, although other configurations employing different number of fibers per photovoltaic cell or panel are possible. Optical switch 436 (FIG. 4A, 4D and FIG. 6) optically switches between sampled points 804 to enable sequential sampling of each of the points 804 by a single detector of spectrometer 444 (FIG. 4) or 460 (FIG.6). Alternatively, as shown in FIG. 3 the sampled points may reside in different illuminated sections of the object plane and be placed on the same line by appropriate software or hardware processing. Spectrometer 444 or 460 determines the spectral signal of the illumination transmitted or scattered at points 804 of thin layer 108. Control unit 116 calibrates the measured signals by a signal measured on the calibration target and processes the spectrum e.g. by comparing it to theoretical spectra stored in the library, and following the comparison provides at least one thin film parameter based on the matching spectral signal characterizing a particular sampled point 804. Substrate 824 is a flexible web substrate translated in the direction indicated by arrow 828.

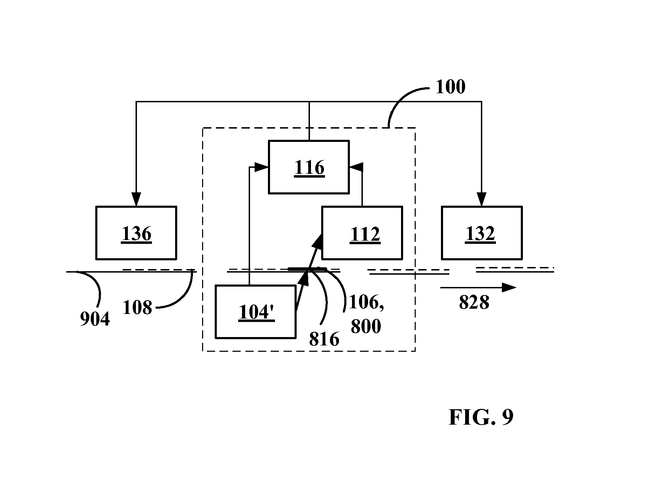

FIG. 9 is a schematic illustration of another exemplary embodiment of thin film quality control process. Substrate 904 is a cut-sheet substrate and may be a flexible or rigid substrate. FIGS. 8 and 9 relate to an in-line thin film quality control system. For off-line operation, system 100 would have its own thin film translation facilities.

In order to enable continuous thin film quality control, the controlled thin film is moved in a second direction 828 approximately perpendicular to the direction of line 812 on which sampled points 804 reside (FIG. 8B). This enables control of almost any desired number of points and at any location on substrate 824. A linear or rotary encoder may be used to control the thin film movement in the direction of arrow 828. The encoder may be also used to synchronize the timing of the measurements in order to perform them at a predetermined location along perpendicular direction. As illustrated in FIG. 8 and FIG. 9, the length of illuminated section 800 is equal or larger to at least one dimension of the substrate 824, which is the width of the substrate 824 on which thin film 108 is deposited. The coordinates of the sampled points 804 are defined a priori as explained above and all of the sampled points are illuminated by an illumination having the same spectral signal. The spectral range of the illumination is selected such that the thin film under control is partially transparent to at least a part of the illumination. The spectral range selection considerations are equally applicable to the reflectance and transmission based measurements. Raman scattering measurements are performed with the laser wavelength in the spectral range, where the measured film is at least partially absorbing.

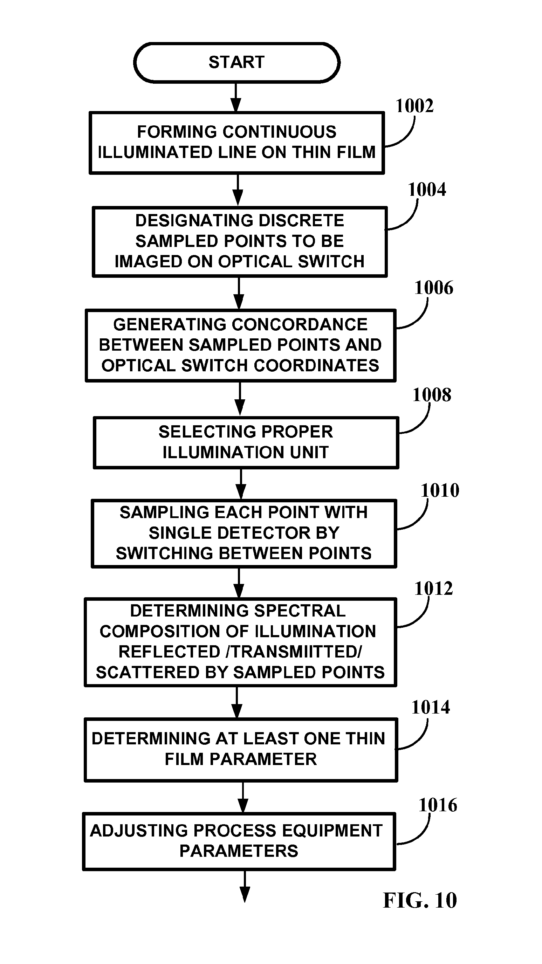

FIG. 10 is a flow diagram illustrating the steps involved in an exemplary system. The illustrated method is that of a photovoltaic thin film quality control process. The method initially begins by illuminating a section of a photovoltaic thin film by an appropriate illumination source and forming on the thin film an illuminated line (Block1002). Following this, the method continues by designating a plurality of discrete sampled points located on said illuminated line, the points to be imaged onto an optical switch (Block 1004). Next, a concordance is generated between the coordinates of the sampled points on the thin film and their coordinates on the optical switch (1006). Next a proper illumination or light source for conducting spectral reflection/transmission or Raman scattering measurement is selected (1008), then each of the points are sequentially sampled by a single suitable detector by optically switching between the points (Block 1010). Finally, the spectral signal of the illumination reflected or transmitted or scattered by the sampled points is determined (Block 1012). Based on the spectral signal thin film parameters are determined (1014). If a deviation of at least one thin film parameter is found to exceed a predetermined value, manufacturing equipment process control parameters are adjusted to reduce the deviation of the measured thin film parameters from the desired or target parameters (1016). As a result the method operates to derive from the spectral signal at least one of a group of the photovoltaic thin film parameters consisting of the thin film thickness, thin film refractive index (n), thin film extinction coefficient (k), thin film surface roughness, thin film crystallinity, conductivity, energy gap, crystal phase, material composition and others. (Block 1014).

The method includes determination of the spectral signal data of the illumination or light reflected or transmitted or inelastically (Raman) scattered by sampled points. This may be done e.g. by comparison of the actual measured spectrum data to a theoretical spectrum stored in the memory, selection of the most appropriate theoretical spectrum, and conversion of the selected spectrum data loaded in a LUT into at least one of the thin film parameters associated with each sampled point. It is worthwhile to mention that if there would be no defects of the thin film controlled, the reflected (or transmitted or scattered) illumination would remain unchanged across the length of the illuminated line. The change in the thin film optical parameters varies the reflected/transmitted/scattered illumination spectrum and accordingly proper interpretation of this variation enables determination of thin film parameters such as the film thickness (d), the film refractive index (n), the film extinction coefficient (k),surface roughness, the film conductivity, energy gap (Eg), crystallinity percentage crystal phase and material composition. The determination of these parameters is performed, based on the closest matching theoretical and measured spectra. Some specific material parameters, e.g. energy gap parameter, can be extracted from the measurements of the thin film characteristics, for example by determining dielectric function models used for fitting the wavelength dispersion of the refractive index (n) and the extinction coefficient (k). Based on the thin film process control parameters as measures of the variation of thin film quality, manufacturing equipment process control parameters can be adjusted in order to control thin film quality including at least one of a group consisting of the deposition pressure, deposition time, deposition rate, deposition temperature, and deposition source material composition.

Should the deviation of the controlled parameters indicate on a defect in the controlled film presence, the defect location and type is communicated to forward 136 and backward 132 (FIG. 1) located, with respect to the quality control system 100 production systems or stations. The information communicated may include process correction instructions and, if possible, defect repair instructions.

A setup process precedes system 100 operation. The setup process includes at least the operations of generation of a concordance look-up-table between the coordinates of the sampled points 804 in the object plane 106 and their coordinates in the optical switch 436 (FIG. 4) and storage of the tables in memory 142. The setup process further includes generation and storage in memory 142 (FIG. 1) of a library containing a plurality of theoretical spectra of the thin film characterized by different sets of variable parameters. The setup process may also include loading of a library of the above theoretical spectra to the memory 142 of the control unit 116. The library may be prepared off-line and loaded through a communication link or by transferable media.

Another embodiment includes a method of determining parameters of a photovoltaic thin film deposited on a substrate in a patterned photovoltaic panel where the panel includes multiple individual photovoltaic cells. This embodiment starts by providing at least one photovoltaic cell panel and one or more optical sampling systems. The method continues by enabling relative movement between the optical sampling system and the panel, and controlling the movement. Next the locations of individual photovoltaic cells on the panel are mapped and, each sampled point location is synchronized such that the sampled point reading takes place, when the sampled point is located at a pre-determined place along the panel movement path.

A number of embodiments have been described. Nevertheless, it will be understood that various modifications may be made without departing from the spirit and scope of the method. Accordingly, other embodiments are within the scope of the following claims:

## Claims

1. A method of a photovoltaic thin film deposited on a substrate in a patterned photovoltaic panel quality control, said method comprising the steps of:
illuminating a section of a photovoltaic thin film by at least one of polychromatic illumination source and monochromatic illumination sources and forming on the thin film a substantially continuous illuminated line;
designating a plurality of discrete sampled points located on said illuminated line;
collecting the light beam reflected or transmitted or scattered from said points and transferring it to an optical switch;
using a detector adapted to receive each of said transferred light beams to sequentially sample each of said points by optically switching between said light beams; and
determining the spectral composition of said received light beams;
deriving from the spectral composition at least one of a group of the photovoltaic thin film parameters consisting of the thin film thickness, refractive index (n) extinction coefficient (k), absorption coefficient, energy gap, crystallinity, conductivity, surface roughness, spectrum and intensity of photoluminescence,
said method **characterized by**
measuring Raman scattering of at least one of the sampling points located on said illumination line and determining the thin film parameters; and
combining the thin film parameters obtained by using polychromatic illumination with the thin film parameters obtained by Raman scattering measurement and determining at least one additional parameter of said thin film.

2. The method according to claim 1 further comprising the steps of:
comparing the derived photovoltaic thin film parameters to the parameters of a theoretical defect free thin film;
determining deviation of the derived thin film parameters from the theoretical thin film parameters; and
wherein the deviations of the derived thin film parameters from the theoretical thin film parameters indicate on the quality of the photovoltaic thin film.

3. The method according to any one of claims 1 - 2 wherein the sampled points are located in one of a group of locations consisting of photovoltaic cell, scribe line, contact frame, and specially introduced measurement targets.

4. The method according to any one of claims 1-3, further comprising extracting from said thin film parameters manufacturing equipment and process control parameters, said parameters being at least one of a group consisting of the deposition pressure, deposition time, deposition temperature, and deposition source material composition.

5. A method of determining parameters of a photovoltaic thin film deposited on a substrate in a patterned photovoltaic panel, the panel being a plurality of individual photovoltaic cells, said method comprising:
providing at least one photovoltaic cell panel and one or more optical sampling systems;
enabling relative movement between the optical sampling system and the panel, and controlling the movement;
identifying locations of individual photovoltaic cells on the panel;
synchronizing each sampled point location such that the sampled point reading takes place, when the sampled point is located at a pre-determined place along the panel movement path; and
wherein the reading is performed in at least one of a group of illuminations consisting of polychromatic or monochromatic illumination,
said method **characterized by** that
at least one of the parameters of the thin film illuminated by polychromatic illumination is determined by matching a theoretical spectrum selected from a library of spectra to an actual spectrum of the thin film measured at each of the sampled points and at least one parameter of the thin film is determined by illuminating the thin film by monochromatic illumination and measuring Raman scattering at each of the sampled points of the thin film.

6. The method according to claim 5 wherein Raman scattering is measured under at least two different monochromatic illuminations enabling different absorption lengths within the measured thin film.

7. The method according to any one of claims 5 and 6, further comprising extracting from the measurements of the thin film parameters, wherein the parameters are at least one of a group consisting of the thickness, roughness, refractive index, absorption, energy gap, conductivity, crystallinity, crystal phase, material composition or photoluminescence spectrum and intensity.

8. The method according to claim 5, wherein the location of the predetermined sampled points on the panel is identified with respect to at least one of a group consisting of a panel edge or an individual photovoltaic cells pattern of the panel.

9. The method according to claim 5, wherein the photovoltaic cell panel comprises a plurality of individual photovoltaic cells separated by scribe lines and wherein the thin film parameters measurement takes place within the individual cells and within the scribe lines.

10. A system for photovoltaic thin film quality control, said system comprising:
one or more polychromatic and monochromatic illumination units operatively configured to illuminate a line in a working plane of the system, said plane coinciding with the photovoltaic thin film plane, and one or more forward and backward located thin film production stations;
a sampling unit operatively configured to sample reflection of one or more sampled points located in the illuminated section and selected such that a straight line can be traced through all of the sampled points;
a control unit operatively configured to synchronize operation of the illumination sources and the sampling unit, communicate with the forward and backward located thin film production stations, and process the sampled data,
said system **characterized in that**
the processing of the sampled data by the control unit includes combining the sampled data and thin film parameters obtained by using polychromatic illumination with the thin film parameters obtained by Raman scattering measurement and determining at least one additional parameter of said thin film and comparison of said sampled data to a theoretical spectral data calculated for a predetermined set of parameters of at least one measured film.

11. The system according to claim 10, wherein the sampling unit includes:
a converter operative to convert the illuminated line with sampled points into a two dimensional surface;
an optical switch operative to switch sampled points on a sensor and determine location of the sampled point on said line; and
at least one spectrometer operative to determine the spectral composition of reflected or transmitted or scattered from each of said points illumination.

12. The system according to claim 10 wherein the control unit includes at least:
communication facilities to communicate with the forward and backward located thin film production systems;
a memory containing a look-up-table determining coordinates of the sampled points on said line; and
a library of theoretical spectra calculated for a combination of different wavelengths and different thin film layers.

13. The system for thin film quality control according to claim 10 further comprising:
an etalon with known and stable in time optical properties, enabling to be compare the spectrum of the etalon to the spectrum at each of the sampled points;
one or more fibers separated from an illuminating bundle and one or more fibers separated from a receiving bundle and configured to collect reflected or transmitted from the etalon illumination;
a calibration facility operative to calibrate the signal received from each of the sampled points with respect to the reflectance spectrum of the etalon.

14. The system for thin film quality control according to claim 10 wherein the spectral data received from each of the sampled points is one of a group of reflected or transmitted or scattered by said sampled point illumination.

15. The system for thin film quality control according to claim 5 further comprising a mechanism providing a relative movement between the thin film layer and the illumination and sampling units.
